# EUROPEAN PATENT APPLICATION

(11) **EP 4 440 219 A1**
(43) Date of publication of application: **02.10.2024**
(21) Application number: 21965201.3
(22) Date of filing: 26.11.2021
(51) Int. Cl.: H04W 72/04

(54) **BEAM INDICATION METHOD AND DEVICE FOR SMART REPEATER**

(71) Applicant: Beijing Xiaomi Mobile Software Co., Ltd., Beijing 100085 (CN)
(72) Inventor: ZHU, Yajun, Beijing 100085 (CN)
(74) Representative: Gunzelmann, Rainer
(86) International application number: PCT/CN2021/133573
(87) International publication number: WO 2023/092467

(57) **Abstract**

Embodiments of the present disclosure disclose a beam indication method for a smart repeater, capable of being applied to the technical field of communications. The method executed by the smart repeater comprises: receiving downlink control information (DCI) scrambled by a preset radio network temporary identifier (RNTI), wherein the DCI is at least used for indicating the information of a beam to be used by a smart repeater. Therefore, the DCI is scrambled by using the preset RNTI known by the smart repeater so as to perform beam indication on the smart repeater, such that the effective management of beams of different links by the smart repeater is implemented, and the reliable use of the smart repeater is ensured, and conditions are provided for expanding the coverage area of a serving cell.

## Description

### TECHNICAL FIELD

The disclosure relates to a field of communication technology, in particular to beam indication methods for a smart repeater and beam indication apparatuses for a smart repeater.

### BACKGROUND

With the continued development of communication technology, the demand for operator-based spectrum is increasing. In the related art, a smart repeater or a reconfigurable intelligence surface (RIS) is usually used to expand the coverage of a cell. The smart repeater or RIS is responsible for a feeder link (also called backhaul link) between the smart repeater and a network device and a service link between the smart repeater and a terminal device.

### SUMMARY

Embodiments of the disclosure provide beam indication methods for a smart repeater and same apparatuses, so that the smart repeater may send and receive information using a corresponding beam based on a beam indicated by a network device.

According to a first aspect of embodiments of the disclosure, a beam indication method for a smart repeater, performed by a network device, is provided. The method includes: scrambling downlink control information (DCI) by using a preset radio network temporary identifier (RNTI), in which the DCI is at least used for indicating information of a beam to be used by the smart repeater; and sending scrambled DCI to the smart repeater.

In the disclosure, the network device scrambles, with a preset RNTI, the DCI that is used for indicating the beam to be used by the smart repeater, and then sends the scrambled DCI to the smart repeater. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

Optionally, the information of the beam includes at least one of the following:
an identification of the beam;
usage time information for the beam;
a link corresponding to the beam; or
an identification of a beam configuration.

Optionally, the identification of the beam is any one of the following:
identifications of a group of beams, in which two beams in the group of beams correspond to a service link and a feeder link respectively;
an identification of one beam; or
identifications of a plurality of beams.

Optionally, the method further includes:
determining a value of a preset bit in the DCI based on a link corresponding to the beam to be used.

Optionally, the method further includes:
in response to the link corresponding to the beam to be used being a service link, scrambling the DCI by the preset RNTI.

Optionally, the method further includes:
in response to the link corresponding to the beam to be used being a feeder link, scrambling the DCI by a Cell RNTI (C-RNTI).

Optionally, the usage time information for the beam is at least one of the following: a starting time position for the beam, a usage time duration for the beam, or an index corresponding to the beam in a list of time domain resources.

Optionally, the method further includes:
sending a radio resource control (RRC) message, in which the RRC message includes at least one list of time domain resource.

Optionally, the DCI includes frequency domain information for indicating the beam to be used by the smart repeater.

According to a second aspect of embodiments of the disclosure, a beam indication method for a smart repeater, performed by a smart repeater, is provided. The method includes: receiving downlink control information (DCI) scrambled by a preset radio network temporary identifier (RNTI), in which the DCI is at least used for indicating information of a beam to be used by the smart repeater.

In the disclosure, the smart repeater receives the DCI scrambled by the preset RNTI from the network device. The DCI is at least used for indicating information of the beam to be used by the smart repeater. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

Optionally, the information of the beam includes at least one of the following:
an identification of the beam;
usage time information for the beam;
a link corresponding to the beam; or
an identification of a beam configuration.

Optionally, the identification of the beam is any one of the following:
identifications of a group of beams, in which two beams in the group of beams correspond to a service link and a feeder link respectively;
an identification of one beam; or
identifications of a plurality of beams.

Optionally, the method further includes:
determining a link corresponding to the beam to be used based on the RNTI and/or a value of a preset bit in the DCI.

Optionally, the method further includes:
in response to the value of the preset bit being a first value, determining that the link corresponding to the beam to be used is a feeder link; or
in response to the value of the preset bit being a second value, determining that the link corresponding to the beam to be used is a service link.

Optionally, the method further includes:
in response to determining that the DCI is scrambled by a preset RNTI, determining that the link corresponding to the beam to be used is a service link;
   or,
in response to determining that the DCI is scrambled by a Cell RNTI (C-RNTI), determining that the link corresponding to the beam to be used is a feeder link.

Optionally, the usage time information for the beam is at least one of the following: a starting time position for the beam, a usage time duration for the beam, or an index corresponding to the beam in a list of time domain resources.

Optionally, the method further includes:
receiving a radio resource control (RRC) message, in which the RRC message includes at least one list of time domain resources.

Optionally, the method further includes:
determining a used frequency domain corresponding to the beam to be used based on frequency domain information included in the DCI.

According to a third aspect of embodiments of the disclosure, a communication apparatus, on a network device side, is provided. The apparatus includes:
a processing module, configured to scramble downlink control information (DCI) by using a preset radio network temporary identifier (RNTI), in which the DCI is at least used for indicating information of a beam to be used by the smart repeater; and
a transceiver module, configured to send scrambled DCI to the smart repeater.

Optionally, the information of the beam includes at least one of the following:
an identification of the beam;
usage time information for the beam;
a link corresponding to the beam; or
an identification of a beam configuration.

Optionally, the identification of the beam is any one of the following:
identifications of a group of beams, in which two beams in the group of beams correspond to a service link and a feeder link respectively;
an identification of one beam; or
identifications of a plurality of beams.

Optionally, the processing module is configured to:
determine a value of a preset bit in the DCI based on a link corresponding to the beam to be used.

Optionally, the processing module is configured to:
in response to the link corresponding to the beam to be used being a service link, scrambling the DCI by the preset RNTI.

Optionally, the processing module is configured to:
in response to the link corresponding to the beam to be used being a feeder link, scrambling the DCI by a Cell RNTI (C-RNTI).

Optionally, the usage time information for the beam is at least one of the following: a starting time position for the beam, a usage time duration for the beam, and an index corresponding to the beam in a list of time domain resources.

Optionally, the transceiver module is configured to:
send a radio resource control (RRC) message, in which the RRC message includes at least one list of time domain resources.

Optionally, the DCI includes frequency domain information for indicating the beam to be used by the smart repeater.

According to a fourth aspect of embodiments of the disclosure, a communication apparatus, on a smart repeater side, is provided. The apparatus includes:
a transceiver module, configured to receive downlink control information (DCI) scrambled by a preset radio network temporary identifier (RNTI), in which the DCI is at least used for indicating information of a beam to be used by the smart repeater.

Optionally, the information of the beam includes at least one of the following:
an identification of the beam;
usage time information for the beam;
a link corresponding to the beam; or
an identification of a beam configuration.

Optionally, the identification of the beam is any one of the following:
identifications of a group of beams, in which two beams in the group of beams correspond to a service link and a feeder link respectively;
an identification of one beam; or
identifications of a plurality of beams.

Optionally, the apparatus further includes:
a processing module, configured to determine a link corresponding to the beam to be used based on a value of a preset bit in the DCI.

Optionally, the processing module is configured to:
in response to the value of the preset bit being a first value, determine that the link corresponding to the beam to be used is a feeder link; or
in response to the value of the preset bit being a second value, determine that the link corresponding to the beam to be used is a service link.

Optionally, the processing module is configured to:
in response to determining that the DCI is scrambled by a preset RNTI, determine that the link corresponding to the beam to be used is a service link;
   or,
in response to determining that the DCI is scrambled by a C-RNTI, determine that the link corresponding to the beam to be used is a feeder link.

Optionally, the usage time information for the beam is at least one of the following: a starting time position for the beam, a usage time duration for the beam, or an index corresponding to the beam in a list of time domain resources.

Optionally, the transceiver module is further configured to:
receive a radio resource control (RRC) message, in which the RRC message includes at least one list of time domain resources.

Optionally, the processing module is configured to:
determine a used frequency domain corresponding to the beam to be used based on frequency domain information included in the DCI.

According to a fifth aspect of embodiments of the disclosure, a communication device is provided. The communication device includes: a processor. When the processor calls a computer program stored in a memory, the method described in the first aspect above is performed.

According to a sixth aspect of embodiments of the disclosure, a communication device is provided. The communication device includes: a processor. When the processor calls a computer program stored in a memory, the method described in the second aspect above is performed.

According to a seventh aspect of embodiments of the disclosure, a communication device is provided. The communication device includes: a processor and a memory having a computer program stored thereon. When the processor executes the computer program stored in the memory, the communication device is caused to perform the method described in the first aspect above.

According to an eighth aspect of embodiments of the disclosure, a communication device is provided. The communication device includes: a processor and a memory having a computer program stored thereon. When the processor executes the computer program stored in the memory, the communication device is caused to perform the method described in the second aspect above.

According to a ninth aspect of embodiments of the disclosure, a communication device is provided. The communication device includes: a processor and an interface circuit. The interface circuit is configured to receive code instructions and transmit the code instructions to the processor. The processor is configured to run the code instructions to perform the method described in the first aspect above.

According to a tenth aspect of embodiments of the disclosure, a communication device is provided. The communication device includes: a processor and an interface circuit. The interface circuit is configured to receive code instructions and transmit the code instructions to the processor. The processor is configured to run the code instructions to perform the method described in the second aspect above.

According to an eleventh aspect of embodiments of the disclosure, a beam indication system for a smart repeater is provided. The system includes the communication apparatus of the third aspect and the communication apparatus of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect of embodiments of the disclosure, a computer-readable storage medium having instructions used by a terminal device stored thereon is provided. When the instructions are executed, the terminal device is caused to perform the method of the first aspect.

According to a thirteenth aspect of embodiments of the disclosure, a readable storage medium having instructions used by the above network device stored thereon is provided. When the instructions are executed, the network device is caused to perform the method of the second aspect.

According to a fourteenth aspect of embodiments of the disclosure, a computer program product including a computer program is provided. When the computer program is run by a computer, the computer is caused to perform the method of the first aspect.

According to a fifteenth aspect of embodiments of the disclosure, a computer program product including a computer program is provided. When the computer program is run by a computer, the computer is caused to perform the method of the second aspect.

According to a sixteenth aspect of embodiments of the disclosure, a chip system is provided. The chip system includes at least one processor and an interface, for supporting the terminal device in realizing the functions involved in the first aspect, e.g., determining or processing at least one of data and information involved in the method described above. In a possible design, the chip system further includes a memory, which is configured to store necessary computer programs and data for the terminal device. The chip system may consist of chips or may include a chip and other discrete devices.

According to a seventeenth aspect of embodiments of the disclosure, a chip system is provided. The chip system includes at least one processor and an interface, for supporting the network device in realizing the functions involved in the second aspect, e.g., determining or processing at least one of data and information involved in the method described above. In a possible design, the chip system further includes a memory, which is configured to store necessary computer programs and data for the network device. The chip system may consist of chips or may include a chip and other discrete devices.

According to an eighteenth aspect of embodiments of the disclosure, a computer program is provided. When the computer program runs on a computer, the computer is caused to perform the method of the first aspect.

According to a nineteenth aspect of embodiments of the disclosure, a computer program is provided. When the computer program runs on a computer, the computer is caused to perform the method of the second aspect.

### BRIEF DESCRIPTION OF THE DRAWINGS

In order to clearly illustrate technical solutions of embodiments of the disclosure or background technologies, a description of drawings used in embodiments or the background technologies is given below.
FIG. 1 is a schematic diagram illustrating a communication system according to an embodiment of the disclosure.
FIG. 2 is a flowchart illustrating a beam indication method for a smart repeater according to an embodiment of the disclosure.
FIG. 3 is a flowchart illustrating a beam indication method for a smart repeater according to an embodiment of the disclosure.
FIG. 4 is a flowchart illustrating a beam indication method for a smart repeater according to an embodiment of the disclosure.
FIG. 5 is a flowchart illustrating a beam indication method for a smart repeater according to an embodiment of the disclosure.
FIG. 6 is a flowchart illustrating a beam indication method for a smart repeater according to an embodiment of the disclosure.
FIG. 7 is a flowchart illustrating a beam indication method for a smart repeater according to an embodiment of the disclosure.
FIG. 8 is a schematic diagram illustrating a communication apparatus according to an embodiment of the disclosure.
FIG. 9 is a schematic diagram illustrating a communication device according to an embodiment of the disclosure.
FIG. 10 is a schematic diagram illustrating a chip according to an embodiment of the disclosure.

### DETAILED DESCRIPTION

For ease of understanding, terms involved in this disclosure are introduced at first.

### 1. Downlink control information (DCI)

DCI is a special information set for scheduling downlink data channel or uplink data channel. The DCI includes relevant contents such as resource block (RB) assignment information, modulation and coding scheme (MCS), etc. Only when a terminal correctly decodes the DCI, the terminal may correctly process downlink data or uplink data.

### 2. Radio network temporary identifier (RNTI)

RNTI is a unique identifier of a terminal in a long term evolution (LTE) wireless network. There are mainly two types of uses for the RNTI. The first use is to scramble DCI, and only when a correct RNTI is used, a user equipment (UE) may decode the received message. The second use is for a base station to identify a UE, and the UE may transmit its own dedicated RNTI value through a sent radio resource control (RRC) message.

### 3. Smart repeater

Smart repeater may be any kind of network device that may at least directionally amplify a signal or may be a terminal device having the function of directionally amplifying a signal.

### 4. Reconfigurable intelligence surface (RIS)

RIS is also known as "reconfigurable smart surface" or "reflective intelligent surface". The RIS has an appearance of a flat sheet. However, it may be flexibly deployed in a wireless communication propagation environment and realize the control of frequency, phase, polarization and other characteristics of reflected or refracted electromagnetic waves, so as to achieve the purpose of reshaping a wireless channel. In detail, the RIS may enhance a signal strength at a receiver by using pre-coding techniques to reflect a signal incident on its surface towards a specific direction, thereby enabling control of the channel.

The smart repeater and the RIS have similar characteristics when interacting in a network, and thus in the disclosure, the smart repeater may refer to a smart repeater and a RIS.

In order to better understand a beam indication method for a smart repeater disclosed in embodiments of the disclosure, a communication system to which embodiments of the disclosure are applied is first described below.

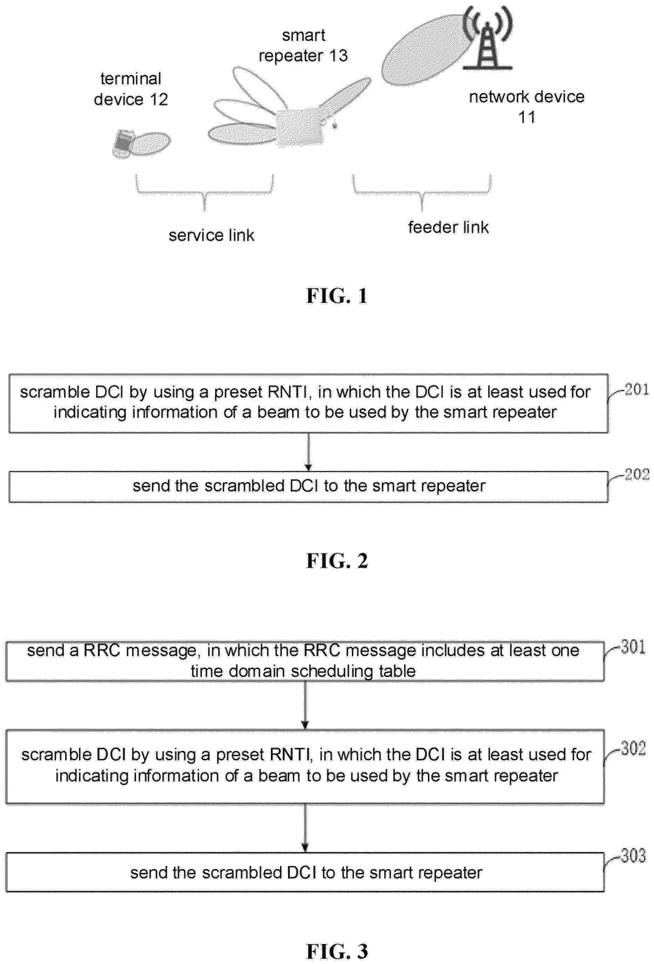

As illustrated in FIG. 1, FIG. 1 is a structural diagram illustrating a communication system according to an embodiment of the disclosure. The communication system may include, but is not limited to, one network device, one smart repeater and one terminal device. The number and form of devices illustrated in FIG. 1 are only for examples and do not constitute a limitation on embodiments of the disclosure. Two or more network devices, two or more smart repeaters and two or more terminal devices may be included in practical applications. The communication system illustrated in FIG. 1 includes, for example, one network device 11, one terminal device 12 and one smart repeater 13.

It should be noted that the technical solutions of embodiments of the disclosure may be used in various communication systems, such as, a long term evolution (LTE) system, a 5th generation (5G) mobile communication system, a 5G new radio (NR) system, or other future new mobile communication systems.

The network device 11 in embodiments of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in embodiments of the disclosure. The network device according to embodiments of the disclosure may be composed of a central unit (CU) and a distributed unit (DU). The CU may also be called a control unit. The use of CU-DU structure allows a protocol layer of the network device, such as a base station, to be split, some functions of the protocol layer are placed in the CU for centralized control, and some or all of the remaining functions of the protocol layer are distributed in the DU, which is intensively controlled by the CU.

The terminal device 12 in embodiments of the disclosure is an entity on a user side for receiving or transmitting signals, such as a cellular phone. The terminal device may also be referred to as a terminal, a UE, a mobile station (MS), a mobile terminal (MT), and the like. The terminal device may be a vehicle with communication functions, a smart vehicle, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless te rminal in transportation safety, a wireless terminal in smart city, a wireless terminal in smart home, etc. The specific technology and specific device form adopted by the terminal are not limited in embodiments of the disclosure.

The smart repeater 13 in embodiments of the disclosure may be any network device capable of at least directionally amplifying a signal.

It is understandable that the communication system described in embodiments of the disclosure is intended to more clearly illustrate the technical solutions of embodiments of the disclosure, and does not constitute a limitation on the technical solutions according to embodiments of the disclosure. It is understood by those skilled in the art that as the system architecture evolves and new business scenarios emerge, the technical solutions according to embodiments of the disclosure are also applicable to similar technical problems.

Usually, the smart repeater is responsible for two links, namely, a service link and a feeder link. Therefore, a new DCI format needs to be designed to support a base station in indicating information of beam(s) to a mobile terminal and to a smart repeater, to complete the beam management of the service link between the smart repeater and the terminal device and the beam management of the feeder link between the smart repeater and the base station. The beam indication methods for a smart repeater and related apparatuses according to the disclosure will be described below in combination with the accompanying drawings.

As illustrated in FIG. 2, FIG. 2 is a flowchart illustrating a beam indication method for a smart repeater according to an embodiment of the disclosure. The method is performed by a network device. As illustrated in FIG. 2, the method includes, but is not limited to, the following.

At block 201, DCI is scrambled by using a preset RNTI, in which the DCI is at least used for indicating information of a beam to be used by the smart repeater.

The preset RNTI may be any of the agreed upon scrambling methods used when indicating a beam for a smart repeater. For example, the preset RNTI may be a new type of RNTI or an existing type of RNTI may be reused as the preset RNTI, which is not limited in the disclosure.

In addition, the beam to be used by the smart repeater may be a beam corresponding to a feeder link or a beam corresponding to a service link.

Optionally, the information of the beam may include: an identification (ID) of the beam, usage time information for the beam, a link corresponding to the beam, or an ID of a beam configuration, which is not limited in the disclosure.

The ID of the beam may be any information that may uniquely identify the beam, such as a transmission configuration indication (TCI) ID or a reference signal ID. For example, the ID of the beam (or called beam ID) may be indicated by a reference signal. Taking a case that the beam is indicated by using the DCI as an example, one reference signal ID may be included in the DCI to represent one beam ID. The reference signal ID may be a channel state information reference signal (CSI-RS) resource indicator (CRI), a sounding reference signal (SRS) resource indicator (SRI), or a synchronization signal block index (SSBI). Or, the reference signal ID may be configured in a TCI, which is included in the DCI, and the reference signal ID corresponding to quasi co-location (QCL)-type-D in the TCI represents the beam ID. The above mentioned reference signal may be a periodic reference signal configured by RRC, a non-periodic reference signal, or a semi-static reference signal, which is not limited in the disclosure. The beam ID mentioned hereinafter may be indicated by the reference signal mentioned in this paragraph, so that any reference to the beam ID may be equivalent to CRI, SRI or TCI, and the CRI, SRI or TCI is referred to as the beam ID hereinafter.

In addition, the usage time information for the beam is at least one of the following: a starting time position for the beam, a usage time duration for the beam, or an index corresponding to the beam in a list of time domain resources.

The starting time position for the beam or the usage time duration for the beam may be indicated by means of time unit. For example, the starting time position for the beam is at the x^{th} time unit after receiving the DCI, or the usage time duration for the beam is Y time units, which is not limited in the disclosure. The time unit may be a slot, a micro slot, or a symbol, and may be indicated by a network device or agreed upon by a protocol, which is not limited in the disclosure.

Optionally, the link corresponding to the beam is used for indicating a link using the beam. The link corresponding to the beam may be indicated by different DCI scrambling methods or by means of a new bit introduced in the DCI.

For example, if the DCI is scrambled by a cell RNTI (C-RNTI), it means that the link corresponding to the beam indicated by the DCI is a feeder link. If the DCI is scrambled by a preset smart repeater RNTI (SR-RNTI), it means that the link corresponding to the beam indicated by the DCI is a service link.

Or, if the value of a newly introduced bit in the DCI is 1, it indicates that the link corresponding to the beam is a feeder link, and if the value of the newly introduced bit in the DCI is 0, it indicates that the link corresponding to the beam is a service link. Or, if the value of the newly introduced bit in the DCI is 1, it indicates that the link corresponding to the beam is a service link, and if the value of the newly introduced bit in the DCI is 0, it indicates that the link corresponding to the beam is a feeder link, which is not limited in the disclosure.

The ID of the beam configuration is an ID of a beam configuration configured by the network device performs for the smart repeater through RRC. The ID of one beam configuration may correspond to one or more of the following parameter groups: IDs of a group of beams, a beam cycling period and a starting time position for the beams; or, one beam ID, a beam cycling period, and a starting time position for the beam; or, IDs of a group of beams and a beam cycling period; or, one beam ID and a beam cycling period; or, IDs of a group of beams. Therefore, the DCI may indicate one or more of the above parameter groups through the ID of one beam configuration.

At block 202, the scrambled DCI is sent to the smart repeater. In the disclosure, after the network device sends the scrambled DCI to the smart repeater, the smart repeater may decode the DCI using the corresponding RNTI through channel monitoring, obtain information of the beam to be used by the smart repeater, and receive and transmit a signal on a corresponding link based on the information of the beam.

In the disclosure, the network device scrambles, with the preset RNTI, the DCI that is used for indicating the beam to be used by the smart repeater, and then sends the scrambled DCI to the smart repeater. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

As illustrated in FIG. 3, FIG. 3 is a flowchart illustrating a beam indication method for a smart repeater according to an embodiment of the disclosure. The method is performed by a network device. As illustrated in FIG. 3, the method includes, but is not limited to, the following.

At block 301, a RRC message is sent, in which the RRC message includes at least one list of time domain resources.

The list of time domain resources may contain many rows, each row including a starting time and a duration corresponding to one beam or one group of beams, and a corresponding index, which is not limited in the disclosure.

In the disclosure, the network device may configure one or more lists of time domain resources in the RRC message, and then send the RRC message to the smart repeater.

At block 302, the DCI is scrambled by using a preset RNTI, in which the DCI is at least used for indicating information of a beam to be used by the smart repeater.

The specific implementation of the block 302 may refer to the detailed description of any embodiment of the disclosure, and will not be repeated here.

It is noteworthy that since the network device has configured the list of time domain resources through the RRC message, the network device may indicate the usage time information for the beam to the smart repeater by indicating, through the DCI, the index in the list of time domain resources corresponding to the usage time information for the beam.

For example, the network device may configure, in the DCI, a certain index in the list of time domain resources. After receiving the RRC message and the DCI, the smart repeater may find and obtain the corresponding usage time information for the beam from the list of time domain resources carried by the RRC message based on the index in the DCI.

Optionally, if multiple lists of time domain resources are configured through the RRC message by the network device, the network device may also configure, in the DCI, any list name and any index contained therein. After receiving the RRC message containing the lists of time domain resources and the DCI, the smart repeater may determine a corresponding list of time domain resources in the RRC message based on the list name included in the DCI, and determine the corresponding usage time information for the beam based on the index in the DCI and the list of time domain resources.

Or, the network device may directly indicate the usage time information for the beam in the DCI. For example, the network device may directly configure, in accordance with any fixed format, the starting time position for the beam and the usage time duration for the beam in the DCI. The fixed format may be a combination of any beam ID, the corresponding starting time position for the beam and the corresponding usage time duration for the beam, which is not limited in the disclosure. After receiving the DCI that directly indicates a beam, the smart repeater may determine the ID of the beam to be used and determine the corresponding usage time information for the beam based on the combination of the beam ID, the corresponding starting time position for the beam and the corresponding usage time duration for the beam.

At block 303, the scrambled DCI is sent to the smart repeater.

The specific implementation of the block 303 in this embodiment may refer to the detailed description of any embodiment of the disclosure and will not be repeated herein.

In the disclosure, after sending the RRC message containing at least one list of time domain resource to the smart repeater, the network device may scramble, with the preset RNTI, the DCI that indicates the beam to be used by the smart repeater, and then send the scrambled DCI to the smart repeater. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

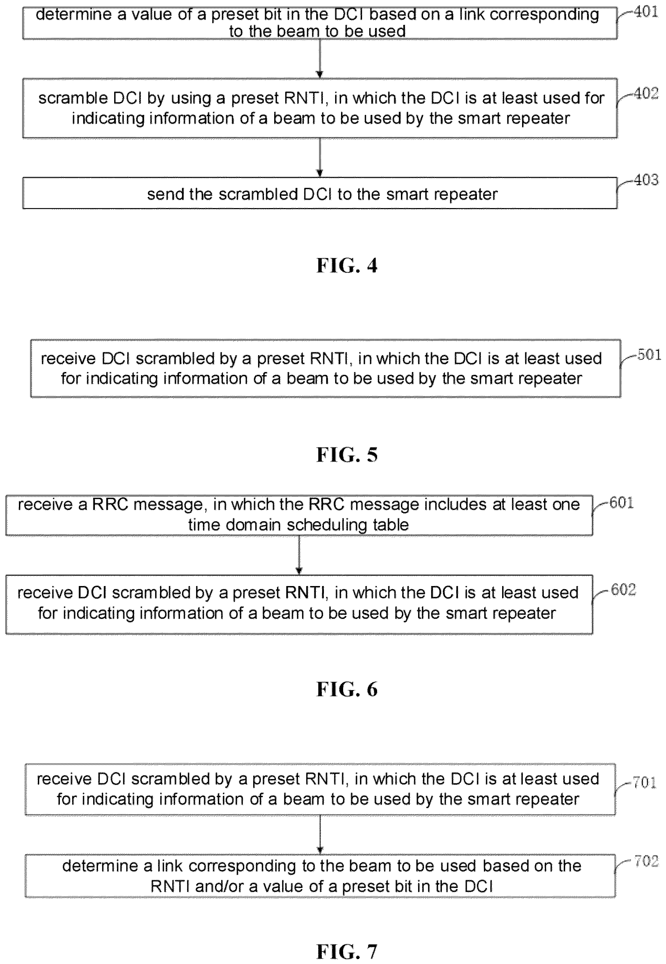

As illustrated in FIG. 4, FIG. 4 is a flowchart illustrating a beam indication method for a smart repeater according to an embodiment of the disclosure. The method is performed by a network device. As illustrated in FIG. 4, the method includes, but is not limited to, the following.

At block 401, a value of a preset bit in the DCI is determined based on a link corresponding to the beam to be used.

In the disclosure, any bit in the DCI may be used to indicate the link corresponding to the beam. For example, 1 bit in the DCI is used to indicate the link corresponding to the beam. If the link corresponding to the beam is a service link, it may be determined that the value of the bit is 0, and if the link corresponding to the beam is a feeder link, it may be determined that the value of the bit is 1. Or, if the link corresponding to the beam is a service link, it may be determined that the value of the bit is 1, and if the link corresponding to the beam is a feeder link, it may be determined that the value of the bit is 0. The above is not limited in the disclosure.

Optionally, the corresponding scrambling method may be determined based on the type of the link corresponding to the beam. For example, when the link corresponding to the beam to be used is a feeder link, it may be determined that the scrambling method is Cell RNTI (C-RNTI). When the link corresponding to the beam to be used is a service link, it may be determined that the scrambling method is smart repeater RNTI (SR-RNTI). Afterwards, the network device may use a corresponding RNTI to scramble the DCI. Therefore, the smart repeater may use the corresponding RNTI to decode the DCI and obtain beam indication information of the corresponding link.

At block 402, the DCI is scrambled by using a preset RNTI, in which the DCI is at least used for indicating information of a beam to be used by the smart repeater.

The specific implementation of the block 402 may refer to the detailed description of any embodiment of the disclosure, and will not be repeated here.

Optionally, the DCI also includes frequency domain information for indicating the beam to be used by the smart repeater. The frequency domain information is used for indicating frequency domain that uses the beam. Therefore, the smart repeater uses the beam within the frequency domain indicated by the frequency domain information. For example, after receiving DCI that indicates one frequency domain ID, the smart repeater transfers the signal to the frequency position indicated by the frequency domain ID and uses the beam ID indicated in the DCI for transmission and reception.

At block 403, the scrambled DCI is sent to the smart repeater.

The specific implementation of the block 403 may refer to the detailed description of any embodiment of the disclosure, and will not be repeated here.

In the disclosure, after determining the value of the preset bit in the DCI based on the link corresponding to the beam to be used, the network device scrambles, using the preset RNTI, the DCI that indicates the beam to be used by the smart repeater, and then sends the scrambled DCI to the smart repeater. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

As illustrated in FIG. 5, FIG. 5 is a flowchart illustrating a beam indication method for a smart repeater according to an embodiment of the disclosure. The method is performed by a smart repeater. As illustrated in FIG. 5, the method includes, but is not limited to, the following.

At block 501, DCI scrambled by using a preset RNTI is received, in which the DCI is at least used for indicating information of a beam to be used by the smart repeater.

The preset RNTI may be any of the agreed upon scrambling methods used when indicating a beam for a smart repeater. For example, the preset RNTI may be a new type of RNTI or an existing type of RNTI may be reused as the preset RNTI, which is not limited in the disclosure.

In addition, the beam to be used by the smart repeater may be a beam corresponding to a feeder link or a beam corresponding to a service link.

Optionally, the information of the beam may include: an ID of the beam, usage time information for the beam, a link corresponding to the beam, or an ID of a beam configuration, which is not limited in the disclosure.

The ID of the beam may be any information that may uniquely identify the beam, which may be a TCI ID or a reference signal ID. For example, the ID of the beam (or called beam ID) may be indicated by a reference signal. Taking a case that the beam is indicated by using the DCI as an example, one reference signal ID may be included in the DCI to represent one beam ID. The reference signal ID may be a CRI, a SRI, or a SSBI. Or, the reference signal ID may be configured in a TCI, which is included in the DCI, and the reference signal ID corresponding to QCL-type-D in the TCI represents the beam ID. The above mentioned reference signal may be a periodic reference signal a non-periodic reference signal, or a semi-static reference signal configured by RRC,, which is not limited in the disclosure.

In addition, the usage time information for the beam is at least one of the following: a starting time position for the beam, a usage time duration for the beam, or an index corresponding to the beam in a list of time domain resources.

The starting time position for the beam or the usage time duration for the beam may be indicated by means of time unit. For example, the starting time location for the beam is at the x^{th} time unit after receiving the DCI or the usage time duration for the beam is Y time units, which is not limited in the disclosure. The time unit may be a slot, a micro slot, or a symbol, and may be indicated by a network device or agreed upon by a protocol, which is not limited in the disclosure.

Optionally, the link corresponding to the beam is used for indicating a link using the beam. The link corresponding to the beam may be indicated by different DCI scrambling methods or by means of a new bit introduced in the DCI.

For example, if the DCI is scrambled by a C-RNTI, it means that the link corresponding to the beam indicated by the DCI is a feeder link. If the DCI is scrambled by a preset SR-RNTI, it means that the link corresponding to the beam indicated by the DCI is a service link.

Or, if the value of a newly introduced bit in the DCI is 1, it indicates that the link corresponding to the beam is a feeder link, and if the value of the newly introduced bit in the DCI is 0, it indicates that the link corresponding to the beam is a service link. Or, if the value of the newly introduced bit in the DCI is 1, it indicates that the link corresponding to the beam is a service link, and if the value of the newly introduced bit in the DCI is 0, it indicates that the link corresponding to the beam is a feeder link, which is not limited in the disclosure.

The ID of the beam configuration is an ID of a beam configuration configured by the network device for the smart repeater through RRC. The ID of one beam configuration may correspond to one or more of the following parameter groups: IDs of a group of beams, a beam cycling period and a starting time position for the beam; or, one beam ID, a beam cycling period and a starting time position for the beam; or, IDs of a group of beams and a beam cycling period; or, one beam ID and a beam cycling period; or, IDs of a group of beams. Therefore, the DCI may indicate one or more of the above parameter groups through the ID of one beam configuration.

In the disclosure, after the network device sends the scrambled DCI to the smart repeater, the smart repeater may decode the DCI using the corresponding RNTI through channel monitoring, obtain information of the beam to be used by the smart repeater, and receive and transmit signals on the corresponding link based on the information of the beam.

In the disclosure, the smart repeater receives the DCI scrambled by using the preset RNTI from the network device, in which the DCI is at least used for indicating information of the beam to be used by the smart repeater. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

As illustrated in FIG. 6, FIG. 6 is a flowchart illustrating a beam indication method for a smart repeater according to an embodiment of the disclosure. The method is performed by a smart repeater. As illustrated in FIG. 6, the method includes, but is not limited to, the following.

At block 601, a RRC message is received, in which the RRC message includes at least one list of time domain resources.

The list of time domain resources may contain many rows, each row including a starting time and a duration corresponding to one beam or one group of beams, and a corresponding index, which is not limited in the disclosure.

In the disclosure, the network device may configure one or more lists of time domain resources in the RRC message, and then send the RRC message to the smart repeater. The smart repeater may receive the RRC messages from the network device through channel monitoring.

At block 602, DCI scrambled by using a preset RNTI is received, in which the DCI is at least used for indicating information of a beam to be used by the smart repeater.

The specific implementation of the block 602 may refer to the detailed description of any embodiment of the disclosure, and will not be repeated here.

It is noteworthy that since the smart repeater has received the RRC message containing the lists of time domain resources sent by the network device, the usage time information for the beam may be determined based on the index, indicated through the DCI, in the list of time domain resources corresponding to the usage time information for the beam.

For example, the network device may configure, in the DCI, a certain index in the list of time domain resources. After receiving the RRC message and the DCI, the smart repeater may find and obtain the usage time information for the beam from the list of time domain resources carried by the RRC message based on the index in the DCI.

Optionally, if multiple lists of time domain resources are configured through the RRC message by the network device, the network device may also configure, in the DCI, any list name and any index contained therein. After receiving the RRC message containing the lists of time domain resources and the DCI, the smart repeater may determine a corresponding list of time domain resources in the RRC message based on the list name included in the DCI, and determine the corresponding usage time information for the beam based on the index in the DCI and the list of time domain resources.

Or, the network device may directly indicate the usage time information for the beam in the DCI. For example, the network device may directly configure, in accordance with any fixed format, the starting time position for the beam and the usage time duration for the beam in the DCI. The fixed format may be a combination of any beam ID, the corresponding starting time position for the beam and the corresponding usage time duration for the beam, which is not limited in the disclosure. After receiving the DCI that directly indicates a beam, the smart repeater may determine an ID of the beam to be used and determine its corresponding usage time information for the beam based on the combination of the beam ID, the corresponding starting time position for the beam and the corresponding usage time duration for the beam.

Optionally, the link corresponding to the beam included in the DCI is used to indicate a link using the beam. The link corresponding to the beam may be indicated by different DCI scrambling methods or by means of a new bit introduced in the DCI.

In the disclosure, the smart repeater may receive the DCI scrambled by the preset RNTI after receiving the RRC message containing at least one list of time domain resources sent by the network device. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

As illustrated in FIG. 7, FIG. 7 is a flowchart illustrating a beam indication method for a smart repeater according to an embodiment of the disclosure. The method is performed by a smart repeater. As illustrated in FIG. 7, the method includes, but is not limited to, the following.

At block 701, DCI scrambled by a preset RNTI is received, in which the DCI is at least used for indicating information of a beam to be used by the smart repeater.

The specific implementation of the block 701 may refer to the detailed description of any embodiment of the disclosure, and will not be repeated here.

Optionally, the DCI also includes frequency domain information for indicating the beam to be used by the smart repeater. The frequency domain information is used for indicating frequency domain that uses the beam. Therefore, the smart repeater uses the beam within the frequency domain indicated by the frequency domain information. For example, after receiving DCI that indicates one frequency domain ID, the smart repeater transfers the signal to a frequency position indicated by the frequency domain ID and uses the beam ID indicated in the DCI for transmission and reception.

At block 702, a link corresponding to the beam to be used is determined based on the RNTI and/or a value of a preset bit in the DCI.

In the disclosure, after receiving the DCI, the smart repeater may determine the link corresponding to the beam to be used based on the value of the preset bit in the DCI. For example, if the value of the preset bit is a first value, it is determined that the link corresponding to the beam to be used is a feeder link. If the value of the preset bit is a second value, it is determined that the link corresponding to the beam to be used is a service link. The first value may be a preset value corresponding to the feeder link, and the second value may be a preset value corresponding to the service link. The first value and the second value may be 0 and 1 or 1 and 0, respectively, which is not limited in the disclosure.

Optionally, the link corresponding to the beam to be used may also be determined based on the DCI scrambling method. For example, if the DCI is scrambled by a preset RNTI, it is determined that the link corresponding to the beam to be used is a service link, or, if the DCI is scrambled by a C-RNTI, it is determined that the link corresponding to the beam to be used is a feeder link.

In the disclosure, after receiving the DCI scrambled by the preset RNTI from the network device, the smart repeater determines the link corresponding to the beam to be used based on the value of the preset bit in the DCI. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

The specific content of the information of the beam indicated by the DCI in the beam indication method for a smart repeater in the disclosure is further explained below for different application scenarios.

For example, for a dynamic scheduling service, the smart repeater needs to use a certain beam during a continuous period of time. In this case, the information of the beam indicated in the DCI sent by the network device to the smart repeater may include one beam ID and the usage time information for the beam. It is understandable that the usage time information for the beam indicated in the DCI may be a specific starting time position for the beam or an in a list of time domain resources. The index in the list of time domain resources corresponds to one time information in the list of time domain resources configured by the RRC.

Or, for the dynamic scheduling service, the information of the beam indicated in the DCI sent by the network device to the smart repeater may be an ID of a beam configuration. The ID of the beam configuration corresponds to one beam ID and the usage time information for the beam configured by RRC, which is not limited in the disclosure.

In addition, in a semi-static scheduling service scenario, the smart repeater needs to use a certain beam at a certain period over a period of time. In this case, the information of the beam indicated in the DCI sent by the network device to the smart repeater may include an ID of a beam configuration. The ID of the beam configuration may correspond to a semi-static beam ID and one usage period for the beam configured by RRC.

Or, in a semi-static scheduling service scenario, the information of the beam indicated in the DCI sent by the network device to the smart repeater may also include one semi-static beam ID and the usage time information of the semi-static beam ID. It is understandable that the usage time information for the beam indicated in the DCI may be a specific starting time position for the beam or an index in a list of time domain resources, in which the index in the list of time domain resources corresponds to one time information in the list of time domain resources configured by the RRC.

Or, in a beam cycling scenario, the network device may perform beam scanning by using the beam indicated by the DCI. The information of the beam indicated in the DCI may include the beam ID. Or, the information of the beam may also include a number of times the beam is reused. The beam ID may be the ID of the beam configuration, IDs of a group of beams, or one beam ID. The ID of the beam configuration may correspond to a set of non-periodic beam IDs configured by one RRC or the ID of the beam configuration may correspond to a set of semi-static beam IDs configured by the RRC, which is not limited in the disclosure. The number of times the beam is reused may be implicitly indicated by the information of the beam. For example, the smart repeater repeatedly sends the beam within the time indicated by the index in the list of time domain resources.

For example, if the terminal device selects a beam on the smart repeater side, the information of the beam indicated in the DCI is IDs of a group of beams. The smart repeater may support the terminal to select a beam with better communication quality by sending multiple beams corresponding to IDs of the group of beams sequentially or cyclically. For example, after the smart repeater receives the DCI containing the ID of the beam configuration from the network device, the smart repeater may determine a list of beams to be used based on the ID of the beam configuration, and then send the beams cyclically to the terminal in accordance with the list of beams. The terminal device may detect each beam in the list of beams respectively, in order to select a beam with better communication capability. The beams may be sent in an order that is identical to the order of beams in RRC configuration. The smart repeater switches beams every time unit, in which the time unit may be the slot, and the granularity of the time unit is not limited herein.

If the information of the beam indicated in the DCI is one beam ID, the smart repeater may support the terminal to select a beam with better communication quality by repeatedly sending the beam corresponding to the beam ID. For example, after determining the beam with better communication capability, the network device may configure the ID of the beam configuration in the DCI to include only an ID of a set of non-periodic group of reference signals of the beam. Or, after determining the beam with better communication capability, the network device may determine the information of the beam in the DCI as this beam ID and its time information. After receiving the DCI, the smart repeater may cyclically send this beam to the terminal device. On the basis of the beam with better communication capability, the terminal device may split the detection beam into several narrow detection beams. The terminal device may then use each of the narrow detection beams to communicate with the smart repeater in different time periods to detect the communication capability corresponding to each narrow detection beam, and thus the narrow detection beam with better communication capability may be identified as the beam with better communication capability.

The beam indication method for a smart repeater is further described below. In the disclosure, the network device may realize beam indication for the smart repeater through the following processes.

Firstly, the network device scrambles the DCI by a preset RNTI, and then sends the scrambled DCI to the smart repeater. The type of the DCI may be 2-x. The smart repeater or a terminal device with functions of the smart repeater may monitor the DCI scrambled by the preset RNTI. After receiving the DCI, the smart repeater may apply the information of the beam to be used in the DCI to a feeder link and/or a service link.

Optionally, the DCI may be located in a specific search space of the terminal device. In other words, a smart repeater or a terminal device with functions of the smart repeater performs a blind detection of the DCI in the specific search space. Or, the DCI may be located in a public search space, which is not limited in the disclosure.

In detail, the DCI at least needs to support the function of beam indication during dynamic scheduling. For a dynamic scheduling service, at least the information of the beam and the usage time information for the beam are required. The implementation may be realized in the following manner.

In Manner 1, the usage time information may be indicated in the DCI, such as the starting time position, a usage time duration and other time information may be indicated in the DCI. The DCI includes at least the following.

### 1. Beam ID

For a group of beams, one of beams in the group of beams corresponds to a service link and another one corresponds to a feeder link.

For a service link or a feeder link, 1 bit may be introduced in the DCI to indicate whether the beam ID is for a feeder link or a service link. Or, the beam ID may be distinguished by a RNTI. For example, the C-RNTI indicates a feeder link, and the preset RNTI indicates a service link.

2. The starting time position for the beam and/or the usage time duration for the beam may be included. The smart repeater starts to use the indicated beam at the time unit indicated by the starting time position for the beam in the DCI, and the beam usage time duration are time units indicated by the usage time duration for the beam. The time unit may be a slot or a symbol.

In Manner 2, uplink and/or downlink lists of time domain resources may be configured in RRC parameters. For example, RRC defines a list of time domain resources, such as a start symbol and the number of consecutive symbols for physical downlink shared channel (PDSCH) (SLIV). The index in the SLIV list may be placed in the DCI, such that the index is indicated along with the beam, to represent a usage time (a starting time and a time length) for the beam. The DCI includes at least the following items.

### 1. Beam ID

For a group of beams, one of beams in the group of beams corresponds to a service link, and another one corresponds to a feeder link.

For the service link and the feeder link, 1 bit may be introduced in the DCI to indicate whether the beam ID is for a feeder link or a service link. Or, the beam ID may be distinguished by a RNTI. For example, C-RNTI indicates a feeder link, and a preset RNTI indicates a service link.

### 2. Index in a list of time domain resources

In the disclosure, the DCI may also support the function of triggering a non-periodic beam.

Optionally, in a scenario where a group of beams are sent cyclically to support the terminal to select a beam for the smart repeater, the DCI includes at least the following items.

In Manner 1, the DCI indicates an ID of a beam configuration, in which the beam configuration may be configured by RRC and contains a plurality of beam IDs.

In Manner 2, the DCI indicates a plurality of beam IDs.

When a group of beams are sent cyclically to support the terminal to select a beam for the smart repeater, the beam indication method of manner 1 may be selected preferentially.

Optionally, if a beam is sent repeatedly to support the terminal to select a beam, the DCI includes at least the following items.

In manner 1, the DCI indicates an ID of a beam configuration, in which the beam configuration may be configured by RRC and contains only one beam ID and a number of times the beam is transmitted repeatedly.

In manner 2, the DCI directly indicates a beam ID and a number of times the beam is sent repeatedly.

In a scenario where a beam is sent repeatedly to support the terminal to select a beam, the beam indication method of manner 2 may be selected preferentially.

When multiple beam IDs are received, the smart repeater uses beams in the order of the beam IDs, and the beam usage granularity is considered as a time unit by default, such as a slot/symbol, or other time units as indicated by the base station.

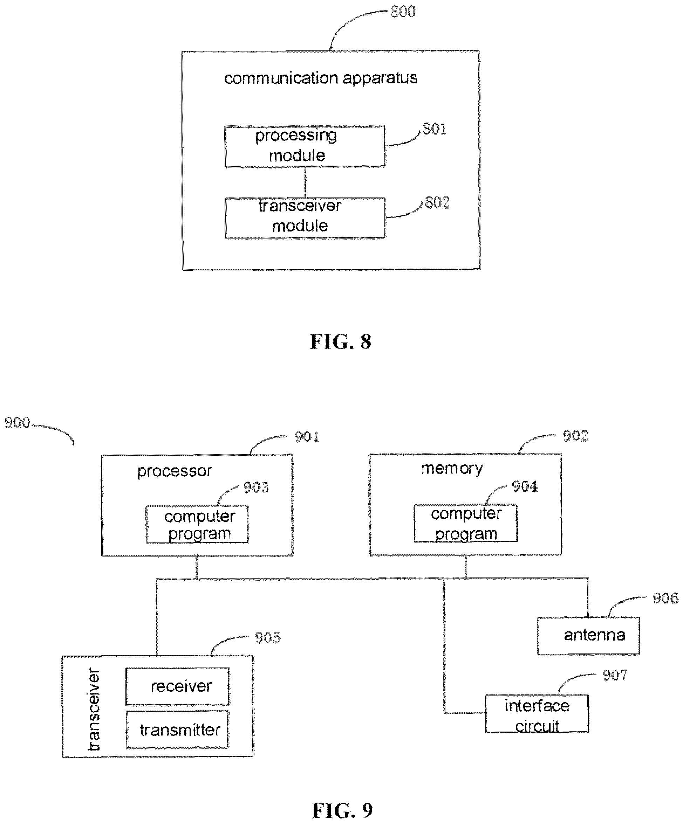

FIG. 8 is a schematic diagram illustrating a communication apparatus 800 according to an embodiment of the disclosure. The communication apparatus 800 illustrated in FIG. 8 may include a processing module 801 and a transceiver module 802. The transceiver module 802 may include a transmitting module and/or a receiving module. The transmitting module is configured to realize a transmitting function, and the receiving module is configured to realize a receiving function. The transceiver module 802 may realize a transmitting function and/or a receiving function.

It is understandable that the communication apparatus 800 may be a network device, an apparatus in the network device, or an apparatus capable of being used together with the network device.

The communication apparatus 800 is applied on a network device side.

The processing module 801 is configured to scramble DCI by using a preset RNTI, in which the DCI is at least used for indicating information of a beam to be used by the smart repeater.

The transceiver module 802 is configured to send the scrambled DCI to the smart repeater.

Optionally, the information of the beam includes at least one of the following:
an identification of the beam;
usage time information for the beam;
a link corresponding to the beam; or
an identification of a beam configuration.

Optionally, the identification of the beam includes any one of the following:
identifications of a group of beams, in which two beams in the group of beams correspond to a service link and a feeder link respectively;
an identification of one beam; or
identifications of a plurality of beams.

Optionally, the processing module 801 is configured to:
determine a value of a preset bit in the DCI based on a link corresponding to the beam to be used.

Optionally, the processing module 801 is configured to:
in response to the link corresponding to the beam to be used being a service link, scrambling the DCI by the preset RNTI.

Optionally, the processing module 801 is configured to:
in response to the link corresponding to the beam to be used being a feeder link, scrambling the DCI by a C-RNTI.

Optionally, the usage time information for the beam includes at least one of the following: a starting time position for the beam, a usage time duration for the beam, and an index corresponding to the beam in a list of time domain resources.

Optionally, the transceiver module 802 is configured to:
send a RRC message, in which the RRC message includes at least one list of time domain resources.

Optionally, the DCI includes frequency domain information for indicating the beam to be used by the smart repeater.

In the disclosure, the network device scrambles the DCI used for indicating the beam to be used by the smart repeater through a preset RNTI, and then sends the scrambled DCI to the smart repeater. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

It is understandable that the communication apparatus 800 may be a smart repeater, an apparatus in the smart repeater, or an apparatus capable of being used together with an access network device.

The communication apparatus 800 is applied on a smart repeater side.

The transceiver module 802 is configured to receive DCI scrambled by a preset RNTI, in which the DCI is at least used for indicating information of a beam to be used by the smart repeater.

Optionally, the information of the beam includes at least one of the following:
an identification of the beam;
usage time information for the beam;
a link corresponding to the beam; or
an identification of a beam configuration.

Optionally, the identification of the beam includes any one of the following:
identifications of a group of beams, in which two beams in the group of beams correspond to a service link and a feeder link respectively;
an identification of one beam; or
identifications of a plurality of beams.

Optionally, the apparatus further includes:
the processing module 801, configured to determine a link corresponding to the beam to be used based on the RNTI and/or a value of a preset bit in the DCI.

Optionally, the processing module 801 is configured to:
in response to the value of the preset bit being a first value, determine that the link corresponding to the beam to be used is a feeder link; or
in response to the value of the preset bit being a second value, determine that the link corresponding to the beam to be used is a service link.

Optionally, the processing module 801 is configured to:
in response to determining that the DCI is scrambled by a preset RNTI, determine that the link corresponding to the beam to be used is a service link;
   or
in response to determining that the DCI is scrambled by a C-RNTI, determine that the link corresponding to the beam to be used is a feeder link.

Optionally, the usage time information for the beam includes at least one of the following: a starting time position for the beam, a usage time duration for the beam, or an index corresponding to the beam in a list of time domain resources.

Optionally, the transceiver module 802 is further configured to:
receive a RRC message, in which the RRC message includes at least one list of time domain resources.

Optionally, the processing module 801 is configured to:
determine a frequency domain corresponding to the beam to be used based on frequency domain information included in the DCI.

In the disclosure, the smart repeater receives the DCI scrambled by the preset RNTI from the network device. The DCI is at least used for indicating information of a beam to be used by the smart repeater. Therefore, by using the preset RNTI that is known to the smart repeater to scramble the DCI that is used for indicating the beam to the smart repeater, the smart repeater may effectively manage the beams of different links, which ensures the reliable use of the smart repeater and provides conditions for expanding the coverage of a serving cell.

FIG. 9 is a schematic diagram illustrating a communication device 900 according to an embodiment of the disclosure. The communication device 900 may be a network device or a smart repeater, or may be a chip, a chip system or a processor that supports the network device to realize the above-described methods, or may be a chip, a chip system or a processor that supports the smart repeater to realize the above-described methods. The device may be used to realize the methods described in the above method embodiments with reference to the description of the above-described method embodiments.

The communication device 900 may include one or more processors 901. The processor 901 may be a general purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a DU, or a CU), executing a computer program, and processing data of the computer program.

Optionally, the communication device 900 may include one or more memories 902 on which computer programs 904 may be stored. The processor 901 executes the computer program 904 to cause the communication device 900 to perform the methods described in the above method embodiments. Optionally, the memory 902 may also store data. The communication device 900 and the memory 902 may be provided separately or may be integrated together.

Optionally, the communication device 900 may also include a transceiver 905 and an antenna 906. The transceiver 905 may be referred to as a transceiver unit, a transceiver machine, or a transceiver circuit, for realizing a transceiver function. The transceiver 905 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication device 900 may also include one or more interface circuits 907. The interface circuits 907 are used to receive code instructions and transmit them to the processor 901. The processor 901 runs the code instructions to cause the communication device 900 to perform the method described in the method embodiments.

If the communication device 900 is a network device, the processor 901 is used to perform the block 201 in FIG. 2, the blocks 301 and 302 in FIG. 3, and the blocks 401 and 402 in FIG. 4.

If the communication device 900 is a smart repeater, the transceiver 905 is used to perform the block 501 in FIG. 5, the blocks 601 and 602 in FIG. 6, and the block 701 in FIG. 7.

In an implementation, the processor 901 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 901 may store a computer program 903. When the computer program 903 runs on the processor 901, the communication device 900 is caused to perform the methods described in the method embodiments above. The computer program 903 may be solidified in the processor 901, and in such case the processor 901 may be implemented by hardware.

In an implementation, the communication device 900 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a smart repeater, but the scope of the communication device described in the disclosure is not limited thereto, and the structure of the communication device may not be limited by FIG. 9. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

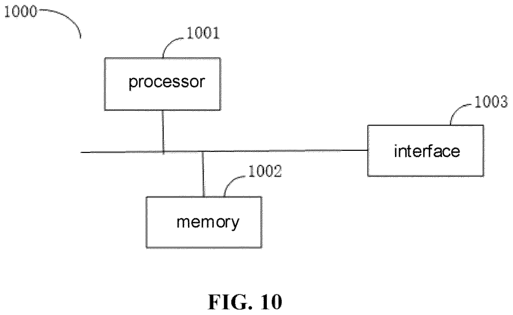

The case where the communication device may be a chip or a chip system is described with reference to the schematic structure of the chip illustrated in FIG. 10. The chip illustrated in FIG. 10 includes a processor 1001 and an interface 1003. There may be one or more processors 1001, and there may be multiple interfaces 1003.

In cases where the chip is used to implement the function of a network device in the embodiment of the disclosure:
the interface 1003 is used for performing the block 202 in FIG. 2, the blocks 301 and 303 in FIG. 3, and the blocks 401 and 403 in FIG. 4.

In cases where the chip is used to implement the function of a smart repeater in the embodiment of the disclosure:
the interface 1003 is used for performing the block 501 in FIG. 5, the blocks 601 and 602 in FIG. 6, and the block 701 in FIG. 7.

Optionally, the chip further includes a memory 1003 used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that the first, second, and other various numerical numbers involved in the disclosure are only described for the convenience of differentiation, and are not used to limit the scope of embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A beam indication method for a smart repeater, performed by a smart repeater, comprising:
receiving downlink control information (DCI) scrambled by a preset radio network temporary identifier (RNTI), wherein the DCI is at least used for indicating information of a beam to be used by the smart repeater.

2. The method of claim 1, wherein the information of the beam comprises at least one of:
an identification of the beam;
usage time information for the beam;
a link corresponding to the beam; or
an identification of a beam configuration.

3. The method of claim 2, wherein the identification of the beam is any one of:
identifications of a group of beams, wherein two beams in the group of beams correspond to a service link and a feeder link respectively;
an identification of one beam; or
identifications of a plurality of beams.

4. The method of claim 2 or 3, further comprising:
determining the link corresponding to the beam to be used based on the RNTI and/or a value of a preset bit in the DCI.

5. The method of any one of claims 2 to 4, wherein the usage time information for the beam is at least one of: a starting time location for the beam, a usage time duration for the beam, and an index corresponding to the beam in a list of time domain resources.

6. The method of claim 5, further comprising:
receiving a radio resource control (RRC) message, wherein the RRC message comprises at least one list of time domain resources.

7. A beam indication method for a smart repeater, performed by a network device, comprising:
scrambling downlink control information (DCI) by using a preset radio network temporary identifier (RNTI), wherein the DCI is at least used for indicating information of a beam to be used by the smart repeater; and
sending scrambled DCI to the smart repeater.

8. The method of claim 7, wherein the information of the beam comprises at least one of:
an identification of the beam;
usage time information for a beam;
a link corresponding to the beam; or
an identification of a beam configuration.

9. The method of claim 8, wherein the identification of the beam is any one of:
identifications of a group of beams, wherein two beams in the group of beams correspond to a service link and a feeder link respectively;
an identification of one beam; or
identifications of a plurality of beams.

10. The method of claim 8 or 9, further comprising:
determining a value of a preset bit in the DCI based on the link corresponding to the beam to be used.

11. The method of claim 8 or 9, wherein scrambling the DCI by using the preset RNTI comprises:
in response to the link corresponding to the beam to be used being a service link, scrambling the DCI by the preset RNTI.

12. The method of claim 11, further comprising:
in response to the link corresponding to the beam to be used being a feeder link, scrambling the DCI by a Cell RNTI (C-RNTI).

13. The method of any one of claims 8 to 12, wherein the usage time information for the beam is at least one of: a starting time position for the bam, a usage time duration for the beam, and an index corresponding to the beam in a list of time domain resources.

14. The method of claim 13, further comprising:
sending a radio resource control (RRC) message, wherein the RRC message comprises at least one list of time domain resources.

15. The method of any one of claims 1 to 8, wherein the DCI comprises frequency domain information for indicating the beam to be used by the smart repeater.

16. A communication apparatus, comprising:
a transceiver module, configured to receive downlink control information (DCI) scrambled by a preset radio network temporary identifier (RNTI), wherein the DCI is at least used for indicating information of a beam to be used by a smart repeater.

17. The apparatus of claim 16, wherein the information of the beam comprises at least one of:
an identification of the beam;
usage time information for the beam;
a link corresponding to the beam; or
an identification of a beam configuration.

18. The apparatus of claim 17, wherein the identification of the beam is any one of:
identifications of a group of beams, wherein two beams in the group of beams correspond to a service link and a feeder link respectively;
an identification of one beam; or
identifications of a plurality of beams.

19. The apparatus of claim 17 or 18, further comprising:
a processing module, configured to determine the link corresponding to the beam to be used based on the RNTI and/or a value of a preset bit in the DCI.

20. The apparatus of any one of claims 17 to 19, wherein the usage time information for the beam is at least one of: a starting time position for the beam, a usage time duration for the beam, and an index corresponding to the beam in a list of time domain resources.

21. The apparatus of claim 20, wherein the transceiver module is further configured to:
receive a radio resource control (RRC) message, wherein the RRC message comprises at least one list of time domain resources.

22. A communication apparatus, comprising:
a processing module, configured to scramble downlink control information (DCI) by using a preset radio network temporary identifier (RNTI), wherein the DCI is at least used for indicating information of a beam to be used by a smart repeater; and
a transceiver module, configured to send scrambled DCI to the smart repeater.

23. The apparatus of claim 20, wherein the information of the beam comprises at least one of:
an identification of the beam;
usage time information for the beam;
a link corresponding to the beam; or
an identification of a beam configuration.

24. The apparatus of claim 23, wherein the identification of the beam is any one of:
identifications of a group of beams, wherein two beams in the group of beams correspond to a service link and a feeder link respectively;
an identification of one beam; or
identifications of a plurality of beams.

25. The apparatus of claim 23 or 24, wherein the processing module is configured to:
determine a value of a preset bit in the DCI based on the link corresponding to the beam to be used.

26. The apparatus of claim 23 or 24, wherein the processing module is configured to:
in response to the link corresponding to the beam to be used being a service link, scrambling the DCI by the preset RNTI.

27. The apparatus of claim 26, wherein the processing module is configured to:
in response to the link corresponding to the beam to be used being a feeder link, scrambling the DCI by a Cell RNTI (C-RNTI).

28. The apparatus of any one of claims 23 to 27, wherein the usage time information for the beam is at least one of: a starting time position for the beam, a usage time duration for the beam, or an index corresponding to the beam in a list of time domain resources.

29. The apparatus of claim 28, wherein the transceiver module is configured to:
sending a radio resource control (RRC) message, wherein the RRC message comprises at least one list of time domain resources.

30. The apparatus of any one of claims 20 to 29, wherein the DCI comprises frequency domain information for indicating the beam to be used by the smart repeater.

31. A communication device comprising a processor and a memory having a computer program stored thereon, wherein when the computer program is executed by the processor, the device is caused to perform the method of any one of claims 1 to 6.

32. A communication device comprising a processor and a memory having a computer program stored thereon, wherein when the computer program is executed by the processor, the device is caused to perform the method of any one of claims 7 to 15.

33. A computer readable storage medium for storing instructions, wherein when the instructions are executed, the method of any one of claims 1 to 6 is performed.

34. A computer readable storage medium for storing instructions, wherein when the instructions are executed, the method of any one of claims 7 to 15 is performed.
